# EUROPEAN PATENT APPLICATION

(11) **EP 4 568 058 A1**
(43) Date of publication of application: **11.06.2025**
(21) Application number: 24208231.1
(22) Date of filing: 22.10.2024
(51) Int. Cl.: H02J 7/00

(54) **ELECTRIC POWER SUPPLY SYSTEM CHARGING TWO DIFFERENT BATTERIES IN PARALLEL**

(30) Priority: 14.11.2023 JP 2023193946
(71) Applicant: TOYOTA JIDOSHA KABUSHIKI KAISHA, Aichi-ken, 471-8571 (JP)
(72) Inventor: ASABA, Kotaro, TOYOTA-SHI, AICHI-KEN, 471-8571 (JP)
(74) Representative: Cabinet Beau de Loménie

(57) **Abstract**

An electric power supply system (1) includes a first battery (21), a second battery (22) having a voltage when fully charged higher than that of the first battery when fully charged, a connection circuit (24) configured to form a parallel circuit, a first relay and a second relay provided in the connection circuit (24), which conduct and interrupt electricity from the external power source to the first battery (21) and to the second battery (22) respectively in the parallel circuit, and a control device (26) configured to execute charging processing to charge the first battery (21) and the second battery (22). The charging processing includes processing of interrupting the first relay to interrupt electricity from the external power source to the first battery (21) when the first battery (21) reaches full charge, while continuing to charge the second battery (22).

## Description

### BACKGROUND OF THE INVENTION

### 1. Field of the Invention

The technology disclosed in the present specification relates to an electric power supply system.

### 2. Description of Related Art

Japanese Unexamined Patent Application Publication No. 2021-16234 (JP 2021-16234 A) discloses a power source device that charges a first battery and a second battery in a parallel circuit in which the first battery and the second battery are connected in parallel. JP 2021-16234 A describes that even in a state in which a state of charge of the first battery and a state of charge of the second battery are different, the first battery and the second battery can be appropriately charged while a circulating current flowing from one of the first battery or the second battery to the other is suppressed.

### SUMMARY OF THE INVENTION

In JP 2021-16234 A, the first battery and the second battery have the same discharge capacity. That is to say, voltages of the first battery and the second battery when fully charged are equal, and a situation is not anticipated in which the voltages of the first battery and the second battery when fully charged are different. Accordingly, in the technology of JP 2021-16234, in such a situation, a battery with a high voltage when fully charged may not be sufficiently charged, or a battery with a low voltage when fully charged may be overcharged. The present specification provides technology for appropriately charging two batteries having different fully-charged voltages in a circuit in which the two batteries are connected in parallel.

An electric power supply system according to an aspect of the invention includes a first battery chargeable by an external power source, a second battery chargeable by the external power source, a voltage of the second battery when fully charged being higher than a voltage of the first battery when fully charged, a connection circuit configured to constitute a parallel circuit, the first battery and the second battery being connected in parallel in the parallel circuit, a first relay provided in the connection circuit, the first relay conducting and interrupting electricity from the external power source to the first battery in the parallel circuit, a second relay provided in the connection circuit, the second relay conducting and interrupting electricity from the external power source to the second battery in the parallel circuit, and a control device configured to execute charging processing to charge the first battery and the second battery using the external power source. The charging processing may include processing of interrupting the first relay to interrupt electricity from the external power source to the first battery when the first battery reaches full charge, while continuing to charge the second battery.

With the above configuration, when the first battery, which has a lower voltage when fully charged than that of the second battery, does reach full charge, the first relay is interrupted to stop charging of the first battery and continue charging of the second battery. This allows both the first battery and the second battery to be appropriately charged to full charge.

In the electric power supply system according to the above aspect, the first relay may include a contactless relay. In the electric power supply system according to the above aspect, the contactless relay may include a semiconductor switching device. In the electric power supply system according to the above aspect, the contactless relay may include a first diode connected in anti-parallel to the semiconductor switching device. The first diode may be oriented so as to allow discharging of the first battery and also to forbid charging of the first battery.

With the above configuration, line breakage or fusing of the first relay can be suppressed.

In the electric power supply system according to the above aspect, the connection circuit may include a second diode connected in series with the second battery in the parallel circuit. The second diode may be oriented so as to forbid discharging of the second battery and also to allow charging of the second battery.

With the above configuration, a circulating current can be suppressed from flowing from the second battery to the first battery in the parallel circuit.

In the electric power supply system according to the above aspect, the charging processing may include, prior to the processing of interrupting electricity to the first battery, processing of causing the first relay to conduct, to charge the first battery, and processing of, when the voltage of the first battery reaches the voltage of the second battery, starting charging of the second battery with the second relay in a conducting state.

With the above configuration, charging of the first battery starts before charging of the second battery. Generally, a battery that has a lower voltage when fully charged has a lower voltage before charging. Thus, by charging the first battery first, measuring the voltages of the first battery and the second battery is not necessary, and accordingly the processing can be simplified.

The electric power supply system according to the above aspect may further include a charging relay that conducts and interrupts electricity from the external power source to the connection circuit, and a first capacitor that is connected in parallel with the first battery and the second battery in the parallel circuit. The charging processing may include, prior to the processing of charging the first battery, processing of precharging the first capacitor by the first battery by causing the first relay to conduct in a state in which the charging relay is interrupted, and in the processing of charging the first battery, the charging relay may be caused to conduct.

With the above configuration, precharging the first capacitor using the first battery, suppresses inrush current from the external power source to the connection circuit, and the burden on the charging relay can be suppressed.

In the electric power supply system according to the above aspect, the connection circuit may include a third diode connected in series with the first battery in the parallel circuit. The third diode may be oriented so as to forbid discharging of the first battery and also to allow charging of the first battery.

With the above configuration, a circulating current can be suppressed from flowing from the first battery to the second battery in the parallel circuit.

In the electric power supply system according to the above aspect, the control device may be configured to execute power feeding processing to supply electric power to an external load through the connection circuit using the first battery and the second battery. The power feeding processing may include processing of interrupting the first relay and also causing the second relay to conduct, to supply electric power from the second battery to the external load.

With the above configuration, by interrupting the first relay, the circulating current from the second battery toward the first battery can be suppressed, and also by causing the second relay to conduct, power feeding can be performed to the external load using the second battery alone.

The electric power supply system according to the above aspect may further include a power feed relay conducting and interrupting electricity from the connection circuit to the external load, and a second capacitor connected in parallel with the first battery and the second battery in the parallel circuit. The power feeding processing may include processing of precharging the second capacitor by the second battery, by interrupting the first relay and also causing conduction of the second relay in a state in which the power feed relay is interrupted, prior to the processing of supplying electric power from the second battery to the external load, and the power feed relay may be caused to conduct in the processing of supplying electric power from the second battery to the external load.

With the above configuration, precharging the second capacitor using the second battery, suppresses excessive current from flowing from the connection circuit to the external load, and the burden on the power feed relay can be suppressed.

In the electric power supply system according to the above aspect, the first relay may include a semiconductor switching device and a first diode connected in anti-parallel with the semiconductor switching device, and the first diode may be oriented so as to allow discharging of the first battery and also to forbid charging of the first battery.

With the above configuration, when the second battery is performing power feeding to an external load, and the voltages of the first battery and the second battery become approximately equal to each other, power feeding can be performed to the external load from both the first battery and the second battery while the flow of circulating current between the first battery and the second battery is suppressed.

In the electric power supply system according to the above aspect, the connection circuit may be configured to selectively constitute the parallel circuit, or a series circuit in which the first battery and the second battery are connected in series.

With the above configuration, the first battery and the second battery can be appropriately charged in the parallel circuit, and a great amount of electric power can be supplied to the outside in the series circuit.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically illustrating a configuration of an electric power supply system according to a first embodiment, and a vehicle in which the system is installed;
FIG. 2 is a flowchart of charging processing executed by the electric power supply system according to the first embodiment;
FIG. 3 is a diagram for describing charging processing executed by the electric power supply system according to the first embodiment;
FIG. 4 is a diagram for describing charging processing executed by the electric power supply system according to the first embodiment;
FIG. 5 is a diagram for describing charging processing executed by the electric power supply system according to the first embodiment;
FIG. 6 is a diagram for describing charging processing executed by the electric power supply system according to the first embodiment;
FIG. 7 is a diagram for describing charging processing executed by the electric power supply system according to the first embodiment;
FIG. 8 is a diagram for describing charging processing executed by the electric power supply system according to the first embodiment;
FIG. 9 is a diagram schematically illustrating a configuration of an electric power supply system according to a second embodiment, and a vehicle in which the system is installed;
FIG. 10 is a flowchart of power feeding processing executed by the electric power supply system according to the second embodiment;
FIG. 11 is a diagram for describing power feeding processing executed by the electric power supply system according to the second embodiment;
FIG. 12 is a diagram for describing power feeding processing executed by the electric power supply system according to the second embodiment;
FIG. 13 is a diagram for describing power feeding processing executed by the electric power supply system according to the second embodiment; and
FIG. 14 is a diagram for describing power feeding processing executed by the electric power supply system according to the second embodiment.

### DETAILED DESCRIPTION OF EMBODIMENTS

### First Embodiment

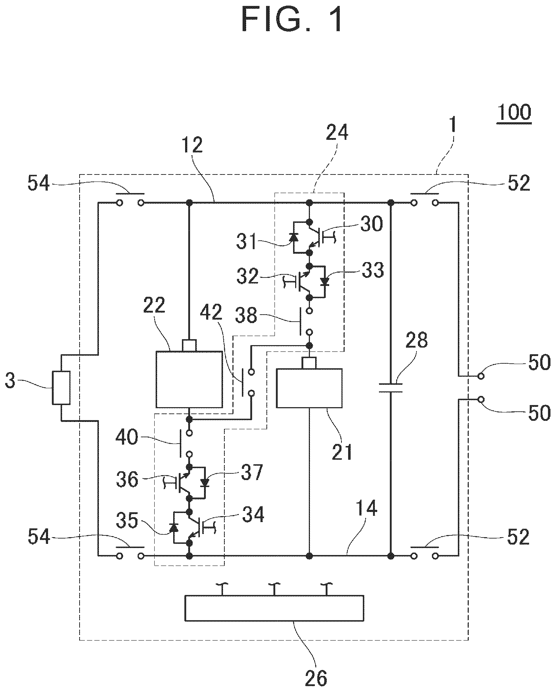

FIG. 1 illustrates an electric power supply system 1 according to a first embodiment. The electric power supply system 1 is installed in a vehicle 100 and supplies electric power to a load 3 (e.g., a power control unit (PCU) or the like) provided in the vehicle 100. The vehicle 100 is an electrified vehicle such as, for example, a battery electric vehicle (BEV), a hybrid electric vehicle (HEV), a plug-in hybrid electric vehicle (PHEV), a fuel cell electric vehicle (FCEV), or the like.

As illustrated in FIG. 1, the electric power supply system 1 includes a first battery 21, a second battery 22, a connection circuit 24, a control device 26, and a first capacitor 28.

The first battery 21 and the second battery 22 are storage batteries capable of being charged with and discharging direct current electric power, and each has a plurality of battery cells disposed in a stack. Each battery cell is made up of a secondary battery that can be repeatedly charged and discharged, such as, for example, a lithium-ion battery, an all-solid-state battery, a nickel metal hydride battery, or the like. The number of battery cells in the first battery 21 and the second battery 22 is not limited in particular, but voltage of the second battery 22 when fully charged is higher than voltage of the first battery 21 when fully charged. Specifically, in the present embodiment, the number of battery cells of the second battery 22 is greater than the number of battery cells of the first battery 21. The voltage of the first battery 21 when fully charged is approximately 390 V, and the voltage of the second battery 22 when fully charged is approximately 410 V. Note however, that the voltages of the first battery 21 and the second battery 22 when fully charged may be changed as appropriate in accordance with required output voltage. Each of the first battery 21 and the second battery 22 is disposed between high potential conductive trace 12 (conductive trace connected to cathodes of the first battery 21 and the second battery 22) and low potential conductive trace 14 (conductive trace connected to anodes of the first battery 21 and the second battery 22) of the electric power supply system 1.

The connection circuit 24 has a first switching device 30, a second switching device 32, a third switching device 34, a fourth switching device 36, a first changeover relay 38, a second changeover relay 40, and a third changeover relay 42. The control device 26 controls operations of the switching devices 30, 32, 34, and 36 and the changeover relays 38, 40, and 42. In the present embodiment, each of the switching devices 30, 32, 34, and 36 is an n-channel metal-oxide semiconductor field-effect transistor (MOSFET). The control device 26 is an electronic control unit (ECU) or a Power Control Unit (PCU) or the like.

The first switching device 30, the second switching device 32, and the first changeover relay 38 are connected in series between the high potential conductive trace 12 and the cathode of the first battery 21. The drain of the first switching device 30 is connected to the high potential conductive trace 12, the source of the first switching device 30 is connected to the source of the second switching device 32, and the drain of the second switching device 32 is connected to the cathode of the first battery 21 via the first changeover relay 38. That is to say, the first switching device 30 is oriented so as to conduct and interrupt electricity from the high potential conductive trace 12 to the first battery 21. The second switching device 32 is oriented so as to conduct and interrupt electricity from the first battery 21 to the high potential conductive trace 12. Also, the first switching device 30 and the second switching device 32 respectively have a diode 31 and a diode 33, connected in anti-parallel thereto, respectively. The diode 31 has an anode connected to the source of the first switching device 30 and also has a cathode connected to the drain of the first switching device 30. That is to say, the diode 31 is oriented so as to allow the first battery 21 to be discharged and also to forbid the first battery 21 from being charged. The diode 33 has an anode connected to the source of the second switching device 32 and also has a cathode connected to the drain of the second switching device 32. That is to say, the diode 33 is oriented so as to allow the first battery 21 to be charged and also to forbid the first battery 21 from being discharged.

The third switching device 34, the fourth switching device 36, and the second changeover relay 40 are connected in series between the low potential conductive trace 14 and the anode of the second battery 22. The source of the third switching device 34 is connected to the low potential conductive trace 14, the drain of the third switching device 34 is connected to the drain of the fourth switching device 36, and the source of the fourth switching device 36 is connected to the anode of the second battery 22 via the second changeover relay 40. That is to say, the third switching device 34 is oriented so as to conduct and interrupt electricity from the second battery 22 to the low potential conductive trace 14 (in other words, electricity from the high potential conductive trace 12 to the second battery 22). The fourth switching device 36 is oriented so as to conduct and interrupt electricity from the low potential conductive trace 14 to the second battery 22 (in other words, electricity from the second battery 22 to the high potential conductive trace 12). Also, the third switching device 34 and the fourth switching device 36 respectively have a diode 35 and a diode 37, connected in anti-parallel thereto, respectively. The diode 35 has an anode connected to the source of the third switching device 34 and also has a cathode connected to the drain of the third switching device 34. That is to say, the diode 35 is oriented so as to allow the second battery 22 to be discharged and also to forbid the second battery 22 from being charged. The diode 37 has an anode connected to the source of the fourth switching device 36 and also has a cathode connected to the drain of the fourth switching device 36. That is to say, the diode 37 is oriented so as to allow the second battery 22 to be charged and also to forbid the second battery 22 from being discharged.

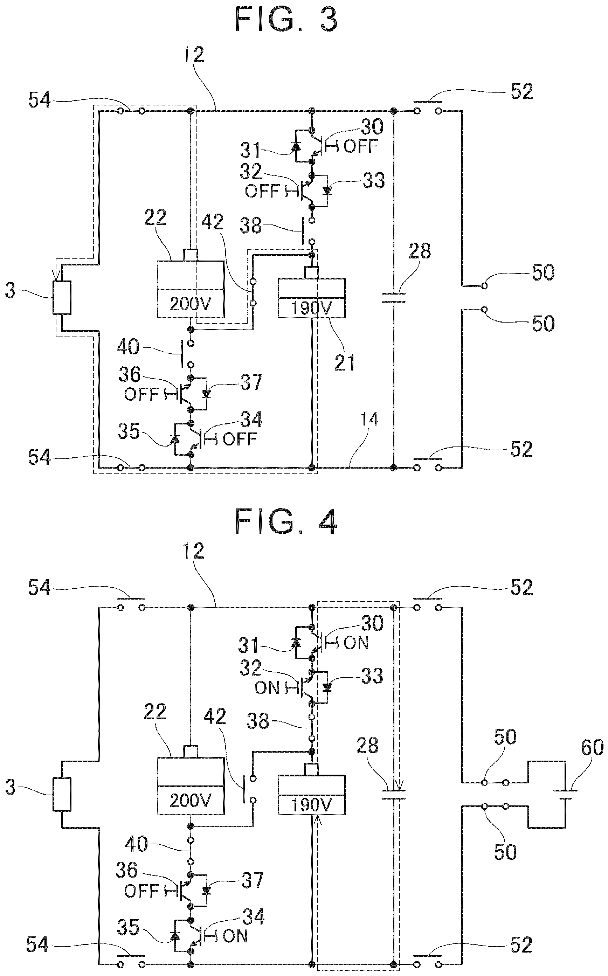

The third changeover relay 42 is provided between a conductive trace that connects the first battery 21 and the first changeover relay 38 and a conductive trace that connects the second battery 22 and the second changeover relay 40. The first changeover relay 38, the second changeover relay 40, and the third changeover relay 42 are provided to switch the connection form of the first battery 21 and the second battery 22. That is to say, the control device 26 is configured to control opening and closing of each of the changeover relays 38, 40, and 42, such that the connection circuit 24 selectively forms a series circuit as illustrated in FIG. 3 or a parallel circuit as illustrated in FIG. 4 and so forth. Specifically, when the control device 26 opens the first changeover relay 38 and the second changeover relay 40 and closes the third changeover relay 42, the connection circuit 24 forms the series circuit illustrated in FIG. 3. In this series circuit, the first battery 21 and the second battery 22 are connected in series. On the other hand, when the control device 26 closes the first changeover relay 38 and the second changeover relay 40 and opens the third changeover relay 42, the connection circuit 24 forms the parallel circuit as illustrated in FIG. 4 and so forth. In this parallel circuit, the first battery 21 and the second battery 22 are connected in parallel.

The first capacitor 28 is provided between the high potential conductive trace 12 and the low potential conductive trace 14. The first capacitor 28 is connected in parallel to the first battery 21 and the second battery 22.

The electric power supply system 1 further includes a charging relay 52 and a discharge relay 54. The charging relay 52 is provided between the connection circuit 24 and a charging inlet 50 of the vehicle 100. The charging relay 52 conducts and interrupts electricity between the connection circuit 24 and the charging inlet 50. The charging inlet 50 is configured such that an external power source 60 (see FIG. 4) can be detachably attached thereto. The charging inlet 50 is electrically connected to the external power source 60 via a connector, for example, when charging the first battery 21 and the second battery 22. Thus, electric power is input from the external power source 60 to the charging inlet 50. In this case, the control device 26 causes the connection circuit 24 to form a parallel circuit, and also closes the charging relay 52. As a result, the first battery 21 and the second battery 22 are connected in parallel to the charging inlet 50. Thus, the first battery 21 and the second battery 22 can be charged at a relatively low voltage. The external power source 60 is, for example, a power source that supplies electric power, such as a commercial power source for home use, a charging station, or the like.

The discharge relay 54 is provided between the connection circuit 24 and the load 3 of the vehicle 100. The discharge relay 54 conducts and interrupts electricity between the connection circuit 24 and the load 3. When the vehicle 100 is travelling, the control device 26 causes the connection circuit 24 to form a series circuit, and also closes the discharge relay 54. Thus, the first battery 21 and the second battery 22 are connected in series to the load 3, and electric power can be supplied to the load 3 at a relatively high voltage.

The control device 26 monitors each of a state of charge (SOC) of the first battery 21 and a state of charge of the second battery 22. The method of monitoring the state of charge is not limited in particular. For example, the control device 26 can calculate the state of charge of the first battery 21 by accumulating the charging current and discharging current of the first battery 21 over time. The same applies to the second battery 22. The control device 26 can estimate the voltages of the first battery 21 and the second battery 22 based on the state of charge of the first battery 21 and the state of charge of the second battery 22, respectively. Note that the voltages of the first battery 21 and the second battery 22 may be directly detected by a voltage sensor.

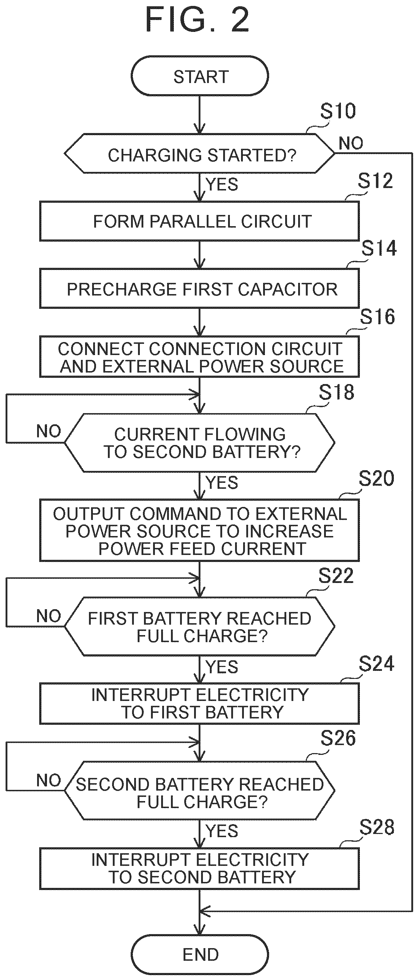

Next, operations of the electric power supply system 1 will be described. FIG. 2 is a flowchart showing charging processing for charging the first battery 21 and the second battery 22 by the external power source 60. The processing shown in FIG. 2 is started in a state in which the connection circuit 24 forms a series circuit. Specifically, as illustrated in FIG. 3, the first changeover relay 38, the second changeover relay 40, and the charging relay 52 are open, and the third changeover relay 42 and the discharge relay 54 are closed. Also, the switching devices 30, 32, 34, and 36 are off. That is to say, this state is a state in which electric power can be supplied from the first battery 21 and the second battery 22 to the load 3, and current flows as indicated by a dashed arrow. In the following drawings, the flow of the current in the electric power supply system 1 is indicated by dashed arrows, in the same way as in FIG. 3. Note that in the present embodiment, a situation is assumed in which the voltage of the first battery 21 is approximately 190V and the voltage of the second battery 22 is approximately 200V, at the time of starting the processing of FIG. 2.

First, as shown in FIG. 2, determination is made in S10 regarding whether charging of the first battery 21 and the second battery 22 has started. For example, when the voltage on the charging inlet 50 side becomes higher than the voltage on the connection circuit 24 side, the control device 26 determines that the connector of the external power source 60 has been connected to the charging inlet 50 and that charging has started.

Upon determining that charging of the first battery 21 and the second battery 22 has started (YES in S10), in S12 the control device 26 causes the connection circuit 24 to form a parallel circuit. Specifically, the control device 26 opens the discharge relay 54, opens the third changeover relay 42, and also closes the first changeover relay 38 and the second changeover relay 40. Accordingly, the connection circuit 24 is switched from a series circuit to a parallel circuit that is illustrated in FIG. 4.

Next, in S14, the control device 26 precharges the first capacitor 28. Specifically, the control device 26 turns on the second switching device 32, and also turns on the first switching device 30 and the third switching device 34. The second switching device 32 is on while the fourth switching device 36 is off, and accordingly discharging of the first battery 21 is allowed and discharging of the second battery 22 is forbidden. Accordingly, as illustrated in FIG. 4, no circulating current flows from the second battery 22 to the first battery 21, and the first capacitor 28 is precharged by the first battery 21. Thus, the first capacitor 28 is charged to the voltage of the first battery 21 (i.e., approximately 190V).

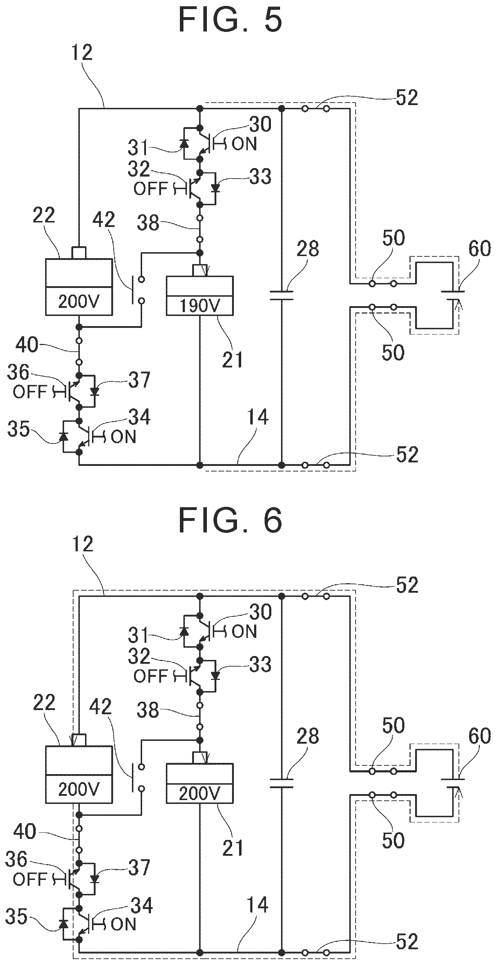

When the precharging of the first capacitor 28 ends, in S16, the control device 26 turns off the second switching device 32 and also closes the charging relay 52. This electrically connects the connection circuit 24 and the external power source 60. The voltage of the first battery 21 at the time of starting charging (approximately 190 V) is lower than the voltage of the second battery 22 at the time of starting charging (approximately 200 V). Accordingly, when S 16 is executed, electric power is supplied only to the first battery 21. That is to say, as illustrated in FIG. 5, no current flows at the second battery 22, and only charging of the first battery 21 is started. Note that in FIGS. 5 to 8, the load 3 and the discharge relay 54 are omitted from illustration.

Thereafter, in S18, the control device 26 monitors whether any current is flowing at the second battery 22. In other words, the control device 26 monitors whether the second battery 22 is being charged. As described above, in S16, current flows only to the first battery 21, and charging of the second battery 22 does not start until the voltage of the first battery 21 reaches the voltage of the second battery 22. Upon the voltage of the first battery 21 being charged to the voltage of the second battery 22, current also starts to flow at the second battery 22, as illustrated in FIG. 6. Upon the control device 26 determining that current is flowing at the second battery 22 (YES in S18), the flow advances to S20.

In S20, the control device 26 outputs a command to the external power source 60 to increase the current supplied to the connection circuit 24. Accordingly, charging of the first battery 21 and the second battery 22 continues while a charging rate of the first battery 21 and the second battery 22 is maintained.

Thereafter, in S22, the control device 26 determines whether the first battery 21 has reached full charge. The control device 26 calculates the state of charge of the first battery 21, for example, and estimates the voltage of the first battery 21 based on the state of charge that is calculated. Upon the control device 26 determining that the first battery 21 has reached full charge (YES in S22), the flow advances to S24.

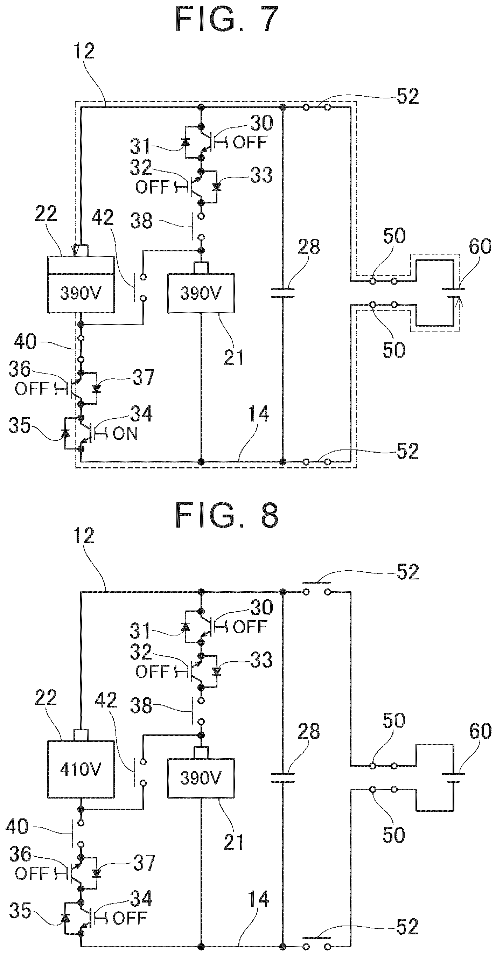

In S24, the control device 26 interrupts electricity from the external power source 60 to the first battery 21. Specifically, the control device 26 turns off the first switching device 30 and thereafter opens the first changeover relay 38. Thus, charging of the first battery 21 is stopped. On the other hand, the third switching device 34 is on, and accordingly charging of the second battery 22 continues as illustrated in FIG. 7.

Thereafter, in S26, the control device 26 determines whether the second battery 22 has reached full charge. Whether the second battery 22 has reached full charge can be determined in the same manner as in S22.

Upon the control device 26 determining that the second battery 22 has reached full charge (YES in S26), electricity from the external power source 60 to the second battery 22 is interrupted in S28. Specifically, the control device 26 turns off the third switching device 34, and thereafter opens the second changeover relay 40 and the charging relay 52. As a result, as illustrated in FIG. 8, electricity from the external power source 60 to the second battery 22 (connection circuit 24) is interrupted. After executing S28, the control device 26 ends the series of processing.

As described above, in the electric power supply system 1 according to the present embodiment, when the first battery 21, which has a lower voltage when fully charged than that of the second battery 22, does reach full charge (YES in S22), the first switching device 30 is turned off (S24) to stop charging of the first battery 21 and continue charging of the second battery 22. This allows both the first battery 21 and the second battery 22 to be appropriately charged to full charge.

Also, in the electric power supply system 1 according to the present embodiment, the fourth switching device 36 connected in series with the second battery 22 includes the diode 37. The diode 37 is oriented so as to forbid discharging of the second battery 22 while allowing charging of the second battery 22, whereby the flow of circulating current from the second battery 22 to the first battery 21 can be suppressed when the connection circuit 24 forms a parallel circuit.

Also, in the electric power supply system 1 according to the present embodiment, before the charging relay 52 is closed, the first switching device 30 and the third switching device 34 are both turned on (S14). Thus, when the charging relay 52 is closed, current begins to flow first to the battery that had lower voltage prior to charging (the first battery 21 in this embodiment). In this way, according to the present embodiment, the charging processing is executed so as to charge the battery with the lower voltage first, without measuring the voltages of the first battery 21 and the second battery 22, whereby processing can be simplified. Furthermore, when the first battery 21 is charged to the voltage of the second battery 22, current also begins to flow to the second battery 22, and accordingly both the first battery 21 and the second battery 22 can be charged.

Furthermore, in the electric power supply system 1 according to the present embodiment, after the first capacitor 28 is precharged using the first battery 21 (S14), the charging relay 52 is closed (S16). This can suppress inrush current from the external power source 60 to the connection circuit 24, and suppress the charging relay 52 from being loaded.

Furthermore, in the electric power supply system 1 according to the present embodiment, the second switching device 32 connected in series with the first battery 21 includes the diode 33. The diode 33 is oriented so as to forbid discharging of the first battery 21 while allowing charging of the first battery 21, whereby the flow of circulating current from the first battery 21 toward the second battery 22 can be suppressed when the connection circuit 24 forms a parallel circuit.

### Second Embodiment

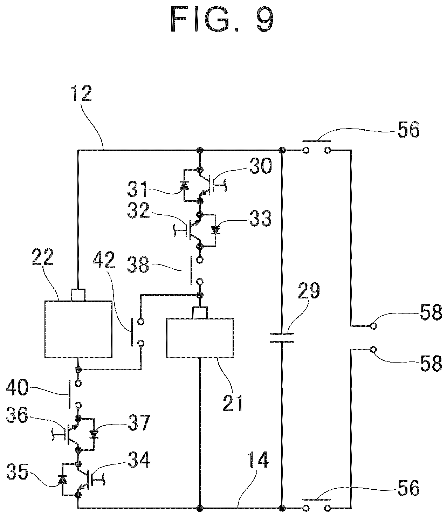

In a second embodiment, the electric power supply system 1 can execute power feeding processing for supplying electric power to an external load 62 (e.g., electrical equipment or the like) using the first battery 21 and the second battery 22, in addition to the charging process of the first embodiment. As illustrated in FIG. 9, the electric power supply system 1 according to the second embodiment includes a second capacitor 29 and a power feed relay 56. Note that in FIGS. 9 and 11 to 14, illustration of configurations in FIG. 1 other than the first battery 21, the second battery 22, the switching devices 30, 32, 34, 36, and the changeover relays 38, 40, 42, is omitted.

As illustrated in FIG. 9, the second capacitor 29 is provided between the high potential conductive trace 12 and the low potential conductive trace 14. The second capacitor 29 is connected in parallel to the first battery 21 and the second battery 22.

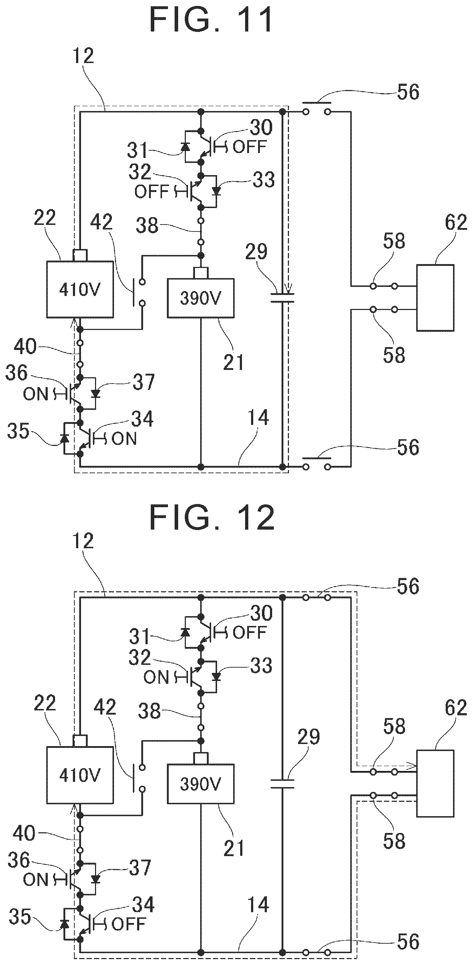

The power feed relay 56 is provided between the connection circuit 24 and a power supply outlet 58 of the vehicle. The power feed relay 56 conducts and interrupts electricity between the connection circuit 24 and the power supply outlet 58. The power supply outlet 58 is configured such that the external load 62 (see FIG. 11) can be detachably connected thereto. For example, when performing power feeding to the external load 62, the power supply outlet 58 is electrically connected to the external load 62 via a connector. Accordingly, the electric power input from the first battery 21 and/or the second battery 22 to the power supply outlet 58 is supplied to the external load 62.

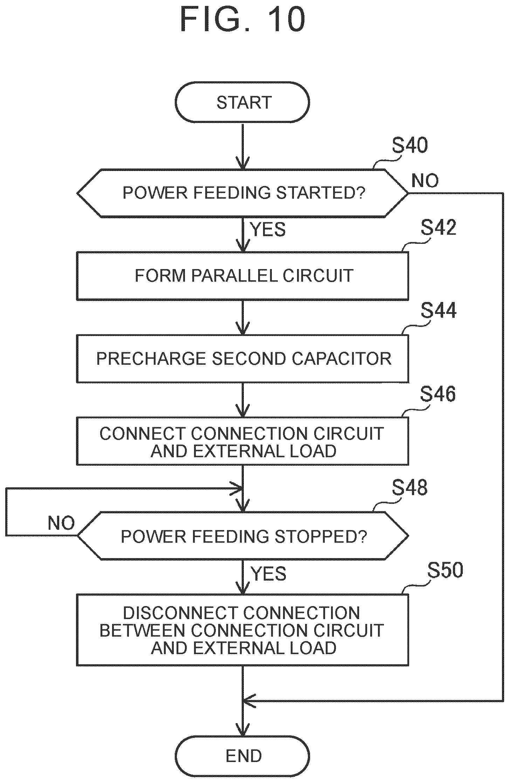

Next, operations of the electric power supply system 1 will be described. FIG. 10 is a flowchart showing power feeding processing in which the first battery 21 and the second battery 22 supply electric power to the external load 62. The processing shown in FIG. 10 is started in a state in which the connection circuit 24 forms a series circuit, in the same way as in FIG. 2. Note that a situation is assumed in which, at the start of the processing in FIG. 10, the first battery 21 and the second battery 22 are both fully charged. That is to say, the voltage of the first battery 21 is approximately 390V, and the voltage of the second battery 22 is approximately 410V.

First, as shown in FIG. 10, in S40, the control device 26 determines whether power feeding from the first battery 21 and the second battery 22 has started. For example, when the voltage on the power supply outlet 58 side becomes lower than the voltage on the connection circuit 24 side, the control device 26 determines that the connector of the external load 62 has been connected to the power supply outlet 58 and that power feeding has started.

Upon determining that power feeding by the first battery 21 and the second battery 22 has started (YES in S40), in S42 the control device 26 causes the connection circuit 24 to form a parallel circuit. Specifically, the control device 26 opens the third changeover relay 42 and also closes the first changeover relay 38 and the second changeover relay 40. Thus, in the same way as in FIG. 4, the connection circuit 24 is switched from a series circuit to a parallel circuit.

Next, in S44, the control device 26 precharges the second capacitor 29. Specifically, the control device 26 turns on the third switching device 34 and the fourth switching device 36. The second switching device 32 is off while the fourth switching device 36 is on, and accordingly discharging of the second battery 22 is allowed and discharging of the first battery 21 is forbidden. Also, the first switching device 30 is off, and accordingly charging of the first battery 21 is forbidden. Thus, as illustrated in FIG. 11, no circulating current flows from the second battery 22 to the first battery 21, and the second capacitor 29 is precharged by the second battery 22. Thus, the second capacitor 29 is charged to the voltage of the second battery 22 (i.e., approximately 410V).

When the precharging of the second capacitor 29 ends, in S46, the control device 26 turns on the second switching device 32, turns off the third switching device 34, and also closes the power feed relay 56. This electrically connects the connection circuit 24 and the external load 62. At this time, the fourth switching device 36 is on, and accordingly the second battery 22 is allowed to discharge. The voltage of the second battery 22 is higher than the voltage of the first battery, and accordingly when S46 is executed, electric power is supplied to the external load 62 from the second battery 22 alone. That is to say, as illustrated in FIG. 12, no current flows from the first battery 21, and power feeding starts from the second battery 22 alone.

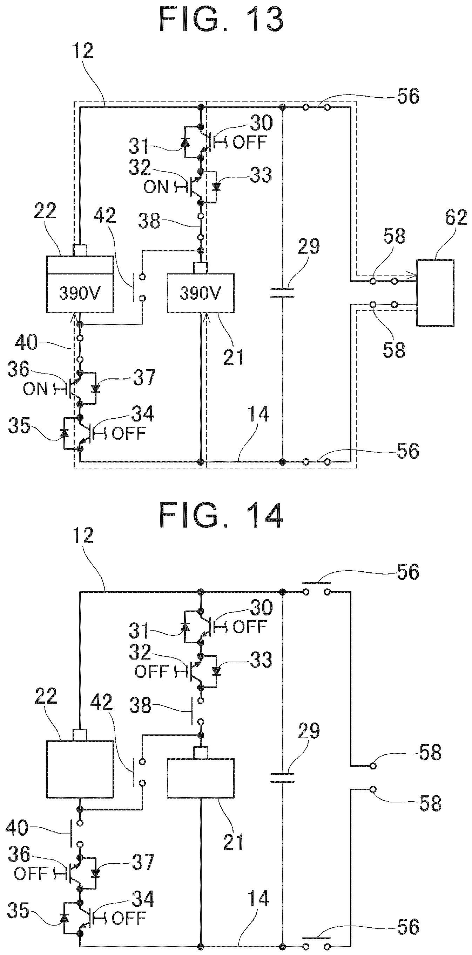

The second switching device 32 is on, and accordingly the first battery 21 is allowed to discharge. Accordingly, when power feeding from the second battery 22 is being executed after execution of S46, and the voltage of the second battery 22 drops to the voltage of the first battery 21, electric power will begin to be supplied to the external load 62 from the first battery 21 as well, as illustrated in FIG. 13. That is to say, power feeding to the external load 62 is started from both the first battery 21 and the second battery 22.

In S48, the control device 26 determines whether the power feeding has been stopped. For example, upon receiving a notification that the external load 62 has been disconnected from the power supply outlet 58, the control device 26 determines that the power feeding has been stopped. When determining that the power feeding has been stopped (YES in S48), in S50 the control device 26 interrupts the connection between the connection circuit 24 and the external load 62. Specifically, the control device 26 turns off the second switching device 32 and the fourth switching device 36, and thereafter opens the first changeover relay 38, the second changeover relay 40, and the power feed relay 56. Thus, as illustrated in FIG. 14, electricity to the external load 62 from the first battery 21 and the second battery 22 is interrupted. After executing S50, the control device 26 ends the series of processing.

As described above, in the electric power supply system 1 according to the present embodiment, while circulating current from the second battery 22 to the first battery 21 is suppressed by turning off the first switching device 30, discharging of the second battery 22 is allowed by the third switching device 34 and the fourth switching device 36, thereby enabling power feeding to the external load 62 using only the second battery 22 (S46).

Furthermore, in the electric power supply system 1 according to the present embodiment, after the second capacitor 29 is precharged using the second battery 22 (S44), the power feed relay 56 is closed (S46). Accordingly, an excessive current can be suppressed from flowing from the connection circuit 24 to the external load 62, thereby burdening the power feed relay 56 is suppressed.

Also, in the electric power supply system 1 according to the present embodiment, the first switching device 30 connected in series with the first battery 21 includes the diode 31. The diode 31 is oriented so as to allow the first battery 21 to be discharged. Accordingly, when the second battery 22 is supplying power to the external load 62, and the voltage of the second battery 22 drops to the voltage of the first battery 21, power feeding to the external load 62 can be performed from both the first battery 21 and the second battery 22, while the flow of circulating current between the first battery 21 and the second battery 22 is suppressed.

### Correlative Relations

The first switching device 30 and the third switching device 34 are examples of "first relay" and "second relay", respectively. The diode 31, the diode 37, and the diode 33 are examples of "first diode", "second diode", and "third diode", respectively.

While embodiments are described in detail above, these are merely exemplary, and are not intended to limit the scope of the claims. The technology described in the claims includes various modifications and alterations of the specific examples illustrated above.

### Modifications

In the above embodiments, a case is described in which the number of battery cells of the second battery 22 is greater than the number of battery cells of the first battery 21, as an example of the voltage of the second battery 22 when fully charged being higher than the voltage of the first battery 21 when fully charged. However, even if the two batteries have the same number of battery cells, for example, the voltages when fully charged may differ due to degradation or the like. The technology disclosed in the present specification is applicable in such cases as well.

Also, each of the switching devices 30, 32, 34, and 36 may be a contactless relay that is different from a semiconductor switching device, or may be a contact relay. Also, in the charging processing according to the first embodiment, the second switching device 32 and the fourth switching device 36 may be replaced with diodes.

Note that the switching devices 30, 32, 34, and 36 do not necessarily have to be provided. In the present modification, the first changeover relay 38 is an example of "first relay," and the second changeover relay 40 is an example of "second relay."

Furthermore, the number of batteries provided in the electric power supply system 1 does not have to be two, and may be three or more.

The technical elements described in the present specification or the drawings exhibit technical usefulness alone or in various combinations, and are not limited to the combinations described in the claims at the time of filing. Also, the technologies exemplified in the present specification or in the drawings may simultaneously achieve a plurality of objects, and exhibit technical utility in itself by achieving one of the objects.

## Claims

1. An electric power supply system (1), comprising:
a first battery (21) chargeable by an external power source;
a second battery (22) chargeable by the external power source, a voltage of the second battery (22) when fully charged being higher than a voltage of the first battery (21) when fully charged;
a connection circuit (24) configured to constitute a parallel circuit, the first battery (21) and the second battery (22) being connected in parallel in the parallel circuit;
a first relay provided in the connection circuit (24), the first relay conducting and interrupting electricity from the external power source to the first battery (21) in the parallel circuit;
a second relay provided in the connection circuit (24), the second relay conducting and interrupting electricity from the external power source to the second battery (22) in the parallel circuit; and
a control device (26) configured to execute charging processing to charge the first battery (21) and the second battery (22) using the external power source,
wherein the charging processing includes processing of interrupting the first relay to interrupt electricity from the external power source to the first battery (21) when the first battery (21) reaches full charge, while continuing to charge the second battery (22).

2. The electric power supply system (1) according to claim 1, wherein the first relay includes a contactless relay.

3. The electric power supply system (1) according to claim 2, wherein the contactless relay includes a semiconductor switching device.

4. The electric power supply system (1) according to claim 3, wherein
the contactless relay includes a first diode connected in anti-parallel with the semiconductor switching device, and
the first diode is oriented so as to allow discharging of the first battery (21) and also to forbid charging of the first battery (21).

5. The electric power supply system (1) according to any one of claims 1 to 4, wherein:
the connection circuit (24) includes a second diode connected in series with the second battery (22) in the parallel circuit; and
the second diode is oriented so as to forbid discharging of the second battery (22) and also to allow charging of the second battery (22).

6. The electric power supply system (1) according to any one of claims 1 to 5, wherein the charging processing includes, prior to the processing of interrupting electricity to the first battery (21),
processing of causing the first relay to conduct, to charge the first battery (21), and
processing of, when the voltage of the first battery (21) reaches the voltage of the second battery (22), starting charging of the second battery (22) with the second relay in a conducting state.

7. The electric power supply system (1) according to claim 6, further comprising:
a charging relay that conducts and interrupts electricity from the external power source to the connection circuit; and
a first capacitor (28) that is connected in parallel with the first battery and the second battery in the parallel circuit, wherein
the charging processing includes, prior to the processing of charging the first battery (21), processing of precharging the first capacitor (28) by the first battery (21) by causing the first relay to conduct in a state in which the charging relay is interrupted, and
in the processing of charging the first battery (21), the charging relay is caused to conduct.

8. The electric power supply system (1) according to any one of claims 1 to 7, wherein
the connection circuit includes a third diode connected in series with the first battery (21) in the parallel circuit, and
the third diode is oriented so as to forbid discharging of the first battery (21) and also to allow charging of the first battery (21).

9. The electric power supply system (1) according to any one of claims 1 to 8, wherein
the control device (26) is configured to execute power feeding processing to supply electric power to an external load through the connection circuit (24) using the first battery (21) and the second battery (22), and
the power feeding processing includes processing of interrupting the first relay and also causing the second relay to conduct, to supply electric power from the second battery (22) to the external load.

10. The electric power supply system (1) according to claim 9, further comprising:
a power feed relay conducting and interrupting electricity from the connection circuit (24) to the external load; and
a second capacitor (29) connected in parallel with the first battery (21) and the second battery (22) in the parallel circuit, wherein
the power feeding processing includes processing of precharging the second capacitor (29) by the second battery (22), by interrupting the first relay and also causing conduction of the second relay in a state in which the power feed relay is interrupted, prior to the processing of supplying electric power from the second battery (22) to the external load, and
the power feed relay is caused to conduct in the processing of supplying electric power from the second battery (22) to the external load.

11. The electric power supply system (1) according to claim 10, wherein
the first relay includes a semiconductor switching device, and a first diode connected in anti-parallel with the semiconductor switching device, and
the first diode is oriented so as to allow discharging of the first battery (21) and also to forbid charging of the first battery (21).

12. The electric power supply system (1) according to any one of claims 1 to 11, wherein the connection circuit (24) is configured to selectively constitute the parallel circuit, or a series circuit in which the first battery (21) and the second battery (22) are connected in series.
